# EUROPEAN PATENT SPECIFICATION

(11) **EP 0 773 713 B1**
(45) Date of publication and mention of the grant of the patent: **16.06.1999**
(21) Application number: 95926944.0
(22) Date of filing: 13.07.1995
(51) Int. Cl.: A01J 25/00, A01J 25/12, A23C 19/076

(54) **SHAPING FRESH CHEESE**
FORMUNG VON FRISCHEN KÄSE
FACONNAGE DE FROMAGE FRAIS

(30) Priority: 01.08.1994 EP 94202235
(43) Date of publication of application: 21.05.1997
(73) Proprietor: UNILEVER PLC, London EC4P 4BQ (GB); UNILEVER N.V., 3013 AL Rotterdam (NL)
(72) Inventor: LANTING, Feico, D-89250 Senden (DE); BIGGEL, Albert, Johann, D-87435 Kempten (DE); SCHMIDT, Michael, D-87435 Kempten (DE)
(74) Representative: Boerma, Caroline
(86) International application number: EP9502831
(87) International publication number: WO9603860

(56) References cited:
- EP-A- 0 289 096
- FR-A- 2 532 525
- PATENT ABSTRACTS OF JAPAN vol. 14 no. 310 (C-736) ,4 July 1990 & JP,A,02 107155 (FUJI OIL CO LTD) 19 April 1970,

## Description

The invention relates to shaping fresh cheese.

Fresh cheese is distinguished from other cheeses in that coagulation is caused to occur by the action of acid or acid and heat rather than by an enzyme such as rennet, and in that the fresh cheese is not matured but is ready for consumption once the manufacturing operations are complete. In the preparation of fresh cheese rennet is often employed, but in relatively small amounts. It serves for finetuning the resulting product properties. The primary influence causing coagulation is acid optionally in combination with heat. See for example 2nd Cheese Symposium 22nd and 23nd Nov. 1990, National Dairy Products Centre, Moorepark, Fermoy pp 31-43. An example of fresh cheese in cream cheese.

Fresh cheese can for example be produced as follows: Milk standardized to the desired fat and protein content is acidified, e.g. by means of a starter culture. Optionally a small amount of rennet is included. When the pH approaches the iso-electric point of casein (about 4.6), protein coagulates. Whey is removed and before or after the whey removal optionally a heattreatment is applied. The curd obtained is socalled raw fresh cheese. Subsequent to whey removal, a homogenisation step may be included in the processing. Optionally further ingredients may be included e.g. butter, cream, herbs, spices, salt, binding and/or structuring agents, at an appropriate stage after whey removal. If coagulation is caused to occur by the combined action of acid or acid and heat, the pH at coagulation can be substantially higher than 4.6, but in preparing fresh cheese, the primary cause of coagulation always is acidification rather than the action of rennet or similar enzyme.

When making fresh cheese it is usually filled into cylindrical moulds or packages at a temperature of about 70°C, allowed to cool down and stored at chill temperatures. If required the fresh cheese is removed from the moulds or package after sufficient rigidity is obtained by cooling.

For processed cheese and matured cheese it is known to give special shapes to the product, e.g. triangles or ball like shapes, e.g. Minibels®. Such shapes are obtained using moulds. For processed cheese, the packaging material is often employed to effectively provide moulds.

An object of the invention is shaping fresh cheese into fancy shapes without entirely relying on moulds. For realizing this the shaping process is done by extruding the product through a nozzle in such condition that the shape of the product as extruded does not collapse.

By the expression "does not collapse" is understood that the product right after extrusion into a strand may show some deformation and flow but that the shape of an extruded strand or piece remains clearly discernable as regards width and thickness.

By "fancy shape" is meant the shape of a product which shape is not substantially entirely determined by the use of a mould and/or gravity and which shape has been obtained by a process which includes extrusion through a nozzle such that the shape of the extruded piece or strand does not collapse but remains discernable as being obtained by extrusion. Examples of products other than cheese having a fancy shape are cakes or puddings the top surface of which has been decorated with extruded whipped cream and certain ice-cream products such as Viennetta®.

Accordingly the invention provides a process for preparing fresh cheese having a fancy shape according to claim 1, wherein fresh cheese is extruded through a nozzle in such condition that the shape of the product as extruded does not collapse.

When extruding fresh cheese at sufficiently low temperature to maintain the required shapes, in practice an inconvenience is experienced in that the entire cheese handling equipment after the last pasteurizing station in the processing line should be extremely hygienic as otherwise mould spoilage can easily occur. This hygienic processing requires expensive equipment and careful processing. The invention also aims at removing these inconveniences and provides thereto a process for shaping a fresh cheese wherein the cheese is extruded at a temperature of at least 65°C and preferably at least 70°C, e.g. at 70-90°C, more preferably at 73-80°C.

By doing so a free standing product is obtained directly after the extrusion step which can be given by the extrusion step any fancy shape and which meets the usual requirements of keepability.

For obtaining the required product properties the cheese preferably comprises sufficient binding and/or structuring agents to be form stable at 65°C and preferably at 70°C. Suitable binding and structuring agents are well known in the art and examples thereof are carboxy methyl cellulose, starches either modified or not, gelatin and fine particulate solids in general.

Preferred embodiments of the present process are given in claims 2-15. The present product is preferably prepared by the present process.

An advantage of an embodiment of the invention is that largely conventional packing lines can be used. For example, first fresh cheese can be filled into tubs or similar containers in a conventional manner. Then before closure of the tub an extruding station is included in the line having one or more nozzles through which fresh cheese is extruded on top of the surface of the partially filled tub, to obtain a fancy shaped portion and then the tub continues on the line e.g. is closed and optionally packed in secondary packaging, palletized etc.

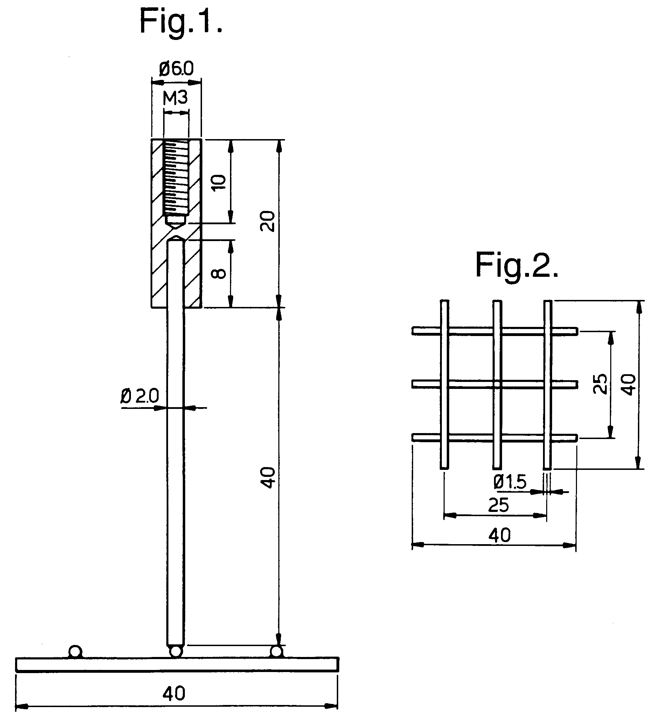

If the extrusion is carried out at elevated temperature as indicated above, to obtain product that does not collapse but has good form stability, it is desirable for the fresh cheese to have at the extrusion temperature a Stevens value of at least 20 g., preferably 25-150 g., more preferably 30-50 g. The Stevens value is a measure for the firmness of a product. It can be measured in conventional manner using a Stevens Texture Analyzer® operated at 1000 g. load range, penetration depth of 20mm and penetration rate of 2mm/s, except that as probe instead of the usual cylindrical rod, a thin cylinder with a grid perpendicularly mounted thereon is employed. The probe is made from stainless steel 316. The grid is made of SS 316 wire having a diameter of 1.5 mm. The design of the probe is shown in Figs 1. and 2. Figure 1 shows the front view of the probe including dimensions in mm. The dimension M₃ is chosen to ensure proper fit in the Texture Analyzer.
The upper part of the probe is clamped into the Stevens Texture Analyzer like a conventional probe, prior to measuring. Figure 2 shows the bottom view of the probe; i.e. the grid, including its dimensions in mm. The cylindrical rod on which the grid is mounted fits tightly into the sleeve which is inserted into the Stevens Texture Analyzer or else it is secured with Loctite 648®.

The endproduct at 10°C preferable has a Stevens (conv) value of from 250 to about 11009., more preferably 300-600 g., especially 400-550g. Stevens (conv) indicates that this Stevens value is measured in a conventional manner using a cylindrical rod with 12.7 mm ⌀, penetration depth 20 mm, penetration rate 2 mm/s. The Stevens (conv.) at 10°C is measured after at least 24 hours stabilisation at 10°C.

To obtain appropriate consistency both at the extrusion temperature and for the end product preferably the cheese that is extruded has a dry matter content of 20-70%, preferably 25-55%, more preferably 35-45%.

The fat content of the product can be up to 80%, preferably 7-75% of the dry weight of the product. Especially good shapes are obtained if 20-75%, particularly 50-70% of the dry matter of the cheese that is extruded is fat. Preferred fat is milkfat, but instead of all or part of the milkfat, also vegetable fat can be employed. Particularly good results are obtained with 50-65% fat in dry matter in combination with a process that includes a homogenisation step (see below).

It is further preferred for the cheese that is extruded to include 0.1-5% binding and/or structuring agent, an amount of 0,1-3%, especially 0.3-1,5% being particularly preferred; preferred binding and/or structuring agents are whey protein, preferably incorporated in the form of whey protein concentrate, locust bean gum, carboxymethyl cellulose, gelatine and a combination of 2 or more thereof Such binding and/or structuring agents can be beneficial for getting very good form stability of the extruded fresh cheese at elevated temperature, to obtain a stable product that does not suffer from oil exudation or moisture syneresis as well as to obtain a desired texture and mouthfeel for the endproduct.

According to a preferred embodiment the portion of fresh cheese having a fancy shape is prepared by a process that includes the steps of
a. acidifying milk to cause coagulation
b. removing whey, applying a heattreatment and optionally incorporating further ingredients
c. including optionally material comprising discrete particles which are to remain discernable as such in the end product
d. extruding through a nozzle.

The milk used in step a. can be an ordinary milk standardized to a particular protein and/or fat content according to the desired endproduct and the process to be applied. The milk can included other materials e.g. buttermilk, skimmilk, cream, butterfat etc. The milk may have been pasteurized and/or homogenized.

The milk is acidified, preferably by means of a starter culture and preferably a small amount of rennet is included.
Coagulation is preferably caused to occur by the action of acid rather than the combined action of acid and heat; accordingly the acidified milk in which coagulation has occurred preferably has a pH of 4.5-5.0, more preferably 4.6-4.9.

Whey is removed, preferably by ultrafiltration (UF) or centrifuging in a separator. The heattreatment serves to obtain increased consistency in the curd and to pasteurize the product. It may be applied before or after the whey removal. If whey removal is done by means of centrifuging, preferably the heattreatment is carried out first, preferably applying a temperature of 85-95°C for a period of 5-60 minutes, especially 10-30 minutes.

If whey removal is done by UF, preferably the heattreatment is applied on the retentate, preferably at 63-85°C, especially 68-75°C for 1-60 minutes, especially 5-25 minutes.

It can further be beneficial to subject the curd to a homogenisation, e.g. by passage through a high pressure homogenizer, before or after the heattreatment, but such homogenisation is preferably done after whey removal. It can be applied while the product is at elevated temperature.

The composition of the milk and the subsequent processing can be chosen such that the obtained product is suitable for extrusion and packing to obtain the fancy shaped portion of fresh cheese without including further ingredients subsequent to step a or with inclusion of only some ingredients for taste, flavour and appearance purposes, e.g. salt, flavour, herbs, spices etc.

Herbs and other materials comprising discrete particles which are to remain discernable as such in the end product are preferably incorporated late in the process, preferably just before the extrusion. If such discrete particles containing materials are to be included, it is for hygienic reasons particularly desired that the product after incorporation of such materials is pasteurised. Then particularly extrusion at the above indicated elevated temperatures is appropriate. If so desired materials may be put on the surface of the product after extrusion, e.g. part or all of the product surface may be supplied with a layer of herbs, pieces of nuts etc.

Ingredients that need not remain discernable as such in the end product, e.g. salt or spices can be incorporated at an earlier stage of the process, but preferably such incorporation is done at a stage after whey removal has taken place.

Similarly, if so desired additional ingredients can be incorporated, e.g. cream, butter, structuring and/or binding agents, etc. at several stages in the above process, but preferably after whey removal has taken place.

We found, however, that particularly good results are obtained if in step a. and b. of the process first a "raw fresh cheese" is prepared, i.e. If in step b. first heattreatment, whey removal and optionally homogenisation are applied, subsequently further ingredients are incorporated, particularly cream, a fat source, preferably comprising fat derived from milk e.g. butter or butterfat, binding and/or structuring agent, salt, mascarpone or two or more thereof, and thereafter a further heattreatment and/or homogenisation is applied.

We have found that even though in step b. already consistency increase has been obtained by the heattreatment and, if applied, homogenisation, a substantial further consistency increase can be obtained by mixing such further ingredients with raw fresh cheese and applying a further heattreatment and/or homogenisation.

If no (further) homogenisation is applied then preferably the composition after admixing the further ingredients, is kept at a temperature of at least 65°C, preferably 70-90°C, more preferably 75-80°C for a period of 5-60 minutes, preferably 15-40 minutes. This can suitably be done by mixing the further ingredients with the raw fresh cheese in a Stephan cutter® heating the composition to the desired temperature e.g. with direct steam and supplying sufficient residence time at such temperature e.g. in a heat holding tank while stirring the mixture sufficiently to prevent gross temperature differences within the product and caking on the walls of the tank.

Thus a particularly preferred process comprises
a. coagulation of milk primarily by the action of acid
b. heattreatment, whey removal and optionally homogenisation and subsequently addition of further ingredients
   * heattreatment
c. optional incorporation of materials comprising discrete particles, e.g. herbs
d. shaping and packing the cheese including extrusion of fresh cheese through a nozzle to obtain a fancy shaped portion of fresh cheese.

If homogenisation is applied then excellent results can also be obtained with only a short or no heattreatment but such homogenisation is preferably applied at a temperature of at least 65°C, preferably 70-90°C, more preferably 75-80°C. The temperature of the composition resulting from step b. may already be in this range and further heattreatment need not be applied. Depending on the precise way step b. is carried out and the amount and temperature of added ingredients, the temperature of the composition after step b. may be relatively low. Then preferably the composition is heated again to obtain the temperature desired for the homogenisation step. Some residence time may be provided at this temperature prior to homogenisation but this is usually not necessary. The homogenisation is preferably applied by passing the composition through a high pressure homogeniser operating e.g. at a pressure of at least 50 bar, preferably 75-500 bar, particularly 100-300 bar.

This embodiment of the invention is particularly attractive for products with a relatively high fat in dry matter content, particularly 50% or more. Products with a relatively firm but still very smooth texture can thus be obtained.

A further advantage of this embodiment of the process is that it can readily be carried out as a continuous or semi-continuous process. For example the further ingredients can suitably be mixed with the raw fresh cheese using in line mixing and passage through a colloid mill, the composition exiting therefrom is passed through a high pressure homogenizer, materials including discrete particles e.g. in the form of a slurry having a dry matter content of e.g. 20-40% can be incorporated using a static mixer, and the resulting fresh cheese is ready to be shaped and packed.

If raw fresh cheese is employed in the process as an intermediate material then preferably 48-75%, particularly 55-70% raw fresh cheese, preferably having a fat content of 5-12% is employed together with 15-50% milk fat, butter, vegetable fat, cream, mascarpone or a combination of 2 or more thereof, optionally up to 4%, particularly 0.5-2% of binding and/or structuring agent, optionally up to 10% of water, part or all of which may be incorporated in the product during heating using direct steam, and optionally up to 15%, preferably 1-10% of minor components e.g. salt, herbs etc., expressed on the weight of the end product.

The invention will hereafter be explained in presently preferred embodiments thereof. Parts and percentages throughout this specification refer to weights unless otherwise indicated.

### Example 1

Cows milk standardized to 2,5% fat was processed to fresh cheese in a usual manner by acidifying and renneting, heating to a sufficient temperature and time for denaturing the whey proteins and separating a cheese mass, i.e. raw fresh cheese, from a liquid (whey) by centrifuging.

| | |
|---|---|
| This cheese mass | 70 parts |
| butter | 18 |
| cream (40% fat) | 4 |
| water | 2,5 |
| herbs | 0,5 |
| salt | 1,9 |
| CMC | 5 |
| gelatin | 2,4 |

were mixed in a Stefan cutter and heated at 78°C.
The hot mix so obtained was extruded through a mohnopump and a slit shaped extrusion nozzle being 7 cm wide and 1 cm high. The hot extruded strand was pleated upon itself. The fancy shape obtained in this manner did not collapse and could withstand transportation to a cooling area.

### Example 2

- 67: parts cheese mass according to example 1
- 15: parts butter
- 10: parts cream (40% fat)
- 7: parts water
- 0,4: parts CMC
- 0,2: parts gelatin
- 0,7: parts salt
were mixed in a Stefan cutter and indirectly heated at 75°C. This hot mixture was extruded using a mohnopump and a nozzle of 5 cm width, 0.5 cm height having a zig zag shaped upper boundary. The extruded fresh cheese strand had a nicely decorated upper surface which did not collapse during transport to a cooling area.

No mould contamination was found after 3 weeks storage at chill temperatures.

### Example 3

Example 2 was repeated except that after heating to 75°C, the mixture was fed to a heat holding tank provided with a surface scraper, and kept at this temperature for 20 minutes. The fresh cheese was then passed to a packing line wherein 250 ml. tubs were partially filled with the product in a conventional manner leaving a head space of about 1.5 cm to the heat seal cover to be provided. The partially filled tubs were then passed to an extrusion station comprising 7 nozzles in a circular arrangement each nozzle having an essentially round, zig zag shaped extrusion mouth, and a similar but bigger nozzle in the centre of the circular arrangement. Part of the fresh cheese was passed to this extrusion station and on the top surface of each partially filled tub 8 rosettes were extruded. The temperature of the product in the tub after extrusion was 73°C or more. The tub was closed by heat sealing. The cover just touched the top of the centre rosette. Each time 16 tubs were mechanically packed in an outer case and the outer cases were moved to a cooling area of 5°C in which the product was stored for 1 week. Excellent product with a nice fancy shape was obtained. The product had better shape retention than that of example 2.

### Examples 4 and 5

Standardized milk which contained 2.2% fat and 3.5% protein was pasteurized for 30 s at 74°C, and then ripened with a starter culture. A small amount of rennet was incorporated. When the pH was 4.7 congulation had occurred and the mixture was heat treated for 20 minutes at 90°C. Then whey was removed in a centrifuge giving a low fat raw fresh cheese which had a dry matter content of about 25% and which contained about 30% fat in the dry matter.
- 65.5: parts of this raw fresh cheese
- 24: parts butter
- 5: parts dairy cream (fat content 40%)
- 0.5: parts of a composition consisting of equal amounts of CMC and gelatine
- 0.5: parts cooking salt
were mixed in a Stephan cutter and heated with direct steam to about 76°C. This heating caused an addition of 3.5% water to the composition.

The composition was transferred to a heat holding tank and maintained at this temperature while it was gently stirred. After 10 minutes the Stevens value reached 22 g. A portion of the composition was then filled and shaped as described in example 3. Considerable flow occurred of the extruded rosettes. When the tubs reached the heat sealing station, the height of the decorations had noticeably reduced particularly owing to the vibrations of the filling machine. However, the shape of the extruded decorations was still recognizable in the end product (Example 4).

For example 5, the remainder of the composition was treated in the heat holding tank for an additional 30 minutes. The Stevens value increased to above 30 g. Then the product was filled and shaped in the same way. The product now had much better form stability. The decorations on the end product were much sharper in shape and much more attractive.

### Example 6

Low fat raw fresh cheese was prepared as described in example 4.
- 66.8: parts of this low fat raw fresh cheese
- 27: parts butter
- 5: parts dairy cream (40% fat)
- 0.5: parts of a CMC and gelatin mixture (1:1 wt ratio)
- 0.7: parts salt
were mixed in a Stephan cutter for 3 minutes. The composition was heated with direct steam to 80°C, causing a water uptake of 3.5% in the composition, and the mixture was stirred for 3 minutes. Then part of the composition was passed through a high pressure homogenizer operating at 300 bar. The resulting product had a Stevens value of 27 g. It was filled shaped and further processed as described in example 3. A good product was obtained.

For comparison, the remainder of the composition was passed to a heat holding tank and heat treated therein for 10 minutes. The resulting composition had a Stevens value of 18. When this product was shaped and filled, the decorations showed considerable flow. Acceptable product was not obtained.

### Examples 7 and 8

Low fat fresh cheese was prepared as described in example 4. With this 2 compositions were prepared:

| Example | 7 | 8 |
|---|---|---|
| Low fat raw fresh cheese | 65.5 parts | 65.7 parts |
| Butter | 27.5 parts | 28.3 parts |
| Dairy cream (40% fat) | 5 parts | 5 parts |
| Nutrilac® (Whey protein concentrate with 90% dry matter and at least 70% whey protein) | 0.5 parts | 0.5 parts |
| Gelatin | 0.7 parts | - |
| Meyprodyn 200®(Locust bean gum) | 0.3 parts | - |
| Salt | 0.5 parts | 0.5 parts |

Each composition was mixed in a Stephan cutter for 3 minutes. Then the compositions were heated to 78°C (Ex 7) or 85°C (Ex 8) using direct steam, causing a water uptake by the product of 3.5 wt.%.

The compositions were then passed to heat holding tanks.

For Ex 7 a Stevens value of 33 g was reached after 20 minutes treatment at 78°C.

For Ex 8 a Stevens value of 30 g was reached after 40 minutes at 85°C.

The products were filled and shaped as described in example 3. Very good products were obtained.

### Example 9

Example 7 was repeated except that
* the following composition was employed
   - 65.5: parts low fat raw fresh cheese
   - 28.3: parts butter
   - 5: parts cream (40% fat)
   - 0.7: parts KE-81 (consisting of equal parts of CMC and gelatin)
   - 0.5: parts salt
* Heating was to 81°C and maintained for 30 minutes.

The Stevens value at the extrusion temperature was 30 g. The Stevens (conv.) at 10°C after 1 day stabilisation at 10°C was 500 g. A very satisfactory product was obtained. The product contained 43% dry matter, 30% fat and 8.4% protein. Accordingly, the fat in dry matter content was 70%. The pH of the product was 4.8.

## Claims

1. Process for preparing fresh cheese having a fancy shape wherein fresh cheese is extruded through a nozzle in such condition that the shape of the product as extruded does not collapse, wherein the cheese is extruded at a temperature of at least 65°C and wherein the cheese has at the extrusion temperature a Stevens value of at least 20 g.

2. Process according to claim 1, wherein the cheese is extruded at a temperature of at least 70°C, more preferably 73-80°C.

3. Process according to claim 2, wherein the cheese has at the extrusion temperature a Stevens value of 25-150 g., more preferably 30-50 g.

4. Process according to claims 1-3, wherein the cheese that is extruded has a dry matter content of 20-70%, preferably 25-55%, more preferably 35-45%.

5. Process according to claims 1-4, wherein the cheese that is extruded Comprises 0.1-5%, preferably 0.1-3%, more preferably 0.3-1.5% binding and/or structuring agent.

6. Process according to claim 5, wherein the binding and/or structuring agent comprises whey protein, locust bean gum, gelatine, carboxymethyl cellulose or a combination of two or more thereof.

7. Process according to claims 1-6, wherein the cheese comprises up to 80%, preferably 7-75%, more preferably 20-75%, most preferably 50-70% fat calculated on the dry weight of the cheese.

8. Process according to claims 1-7, wherein
a. a milk is acidified to cause coagulation
b. whey is removed, a heattreatment is applied and optionally further ingredients are incorporated
c. optionally material comprising discrete particles which are to remain discernable as such in the end product are included
d. fresh cheese is extruded.

9. Process according to claim 8, wherein in step b cream, butter, fat, binding and/or structuring agent, salt, mascarpone or two or more thereof are incorporated.

10. Process according to claim 8 or 9, wherein in between step b and c, a homogenisation treatment is applied, preferably at a temperature of at least 65°C, more preferably 70-90°C, most preferably 75-80°C.

11. Process according to claims 8-10, wherein in step b
b1. whey is removed prior to
b2. the heattreatment and optional incorporation of further ingredients.

12. Process according to claim 11, wherein
* in step b2 the heattreatment is applied, subsequently further ingredients are incorporated, and
* after step b a further heattreatment is applied.

13. Process according to claims 8-10, wherein in step b the following steps are applied
B1 heattreatment
B2 whey removal
B3 optional incorporation of further ingredients

14. Process according to claim 13, wherein further ingredients are incorporated in step B3 and after step b a further heattreatment is applied.

15. Process according to claim 12 or 14, wherein in the further heattreatment the composition is kept at a temperature of at least 65°C, preferably 70-90°C, more preferably 75-80°C for a period of time sufficient to cause increase of consistency to occur.

## Patentansprüche

1. Verfahren zur Herstellung von Frischkäse, der eine ungewöhnliche Formgebung hat, wobei Frischkäse durch eine Düse in solchem Zustand extrudiert wird, daß die Form des Produktes, wie es extrudiert wird, nicht kollabiert, wobei der Käse bei einer Temperatur von mindestens 65°C extrudiert wird, und wobei der Käse bei der Extrusionstemperatur einen Stevens-Wert von mindestens 20 g hat.

2. Verfahren nach Anspruch 1, wobei der Käse bei einer Temperatur von mindestens 70°C, stärker bevorzugt von 73 bis 80°C, extrudiert wird.

3. Verfahren nach Anspruch 2, wobei der Käse bei der Extrusionstemperatur einen Stevens-Wert von 25 bis 150 g, stärker bevorzugt 30 bis 50 g, hat.

4. Verfahren nach den Ansprüchen 1 bis 3, wobei der Käse, der extrudiert wird, einen Trockensubstanzgehalt von 20 bis 70%, vorzugsweise 25 bis 55%, stärker bevorzugt 35 bis 45%, hat.

5. Verfahren nach den Ansprüchen 1 bis 4, wobei der Käse, der extrudiert wird, 0,1 bis 5%, vorzugsweise 0,1 bis 3%, stärker bevorzugt 0,3 bis 1,5%, Binde- und/oder Strukturierungsmittel umfaßt.

6. Verfahren nach Anspruch 5, wobei das Binde- und/oder Strukturierungsmittel Molkeprotein, Johannisbrotgummi, Gelatine, Carboxymethylcellulose oder eine Kombination von zwei oder mehreren daraus umfaßt.

7. Verfahren nach den Ansprüchen 1 bis 6, wobei der Käse bis zu 80%, vorzugsweise 7 bis 75%, stärker bevorzugt 20 bis 75%, am stärksten bevorzugt 50 bis 70%, Fett, berechnet auf das Trockengewicht des Käses, umfaßt.

8. Verfahren nach den Ansprüchen 1 bis 7, wobei
a. eine Milch gesäuert wird, um Koagulation hervorzurufen,
b. Molke entfernt wird, eine Hitzebehandlung angewandt wird und fakultativ weitere Zutaten beigefügt werden,
c. fakultativ Materialien hinzugefügt werden, die diskrete Partikel, die als solche in dem Endprodukt erkennbar bleiben sollen, umfassen,
d. Frischkäse extrudiert wird.

9. Verfahren nach Anspruch 8, wobei in Schritt b. Sahne, Butter, Fett, Binde- und/oder Strukturierungsmittel, Salz, Mascarpone oder zwei oder mehrere dieser beigefügt werden.

10. Verfahren nach Anspruch 8 oder 9, wobei zwischen Schritt b. und c. eine Homogenisierungsbehandlung angewandt wird, vorzugsweise bei einer Temperatur von mindestens 65°C, stärker bevorzugt 70 bis 90°C, am stärksten bevorzugt 75 bis 80°C.

11. Verfahren nach den Ansprüchen 8 bis 10, wobei in Schritt b.
b1. Molke entfernt wird, vor
b2. der Hitzebehandlung und der fakultativen Beifügung von weiteren Zutaten.

12. Verfahren nach Anspruch 11, wobei
* in Schritt b2. die Hitzebehandlung angewandt wird, anschließend weitere Zutaten beigefügt werden, und
* nach Schritt b. eine weitere Hitzebehandlung angewandt wird.

13. Verfahren nach den Ansprüchen 8 bis 10, wobei in Schritt b. die folgenden Schritte angewandt werden:
B1 Hitzebehandlung
B2 Entfernen der Molke
B3 fakultative Beifügung weiterer Zutaten.

14. Verfahren nach Anspruch 13, wobei weitere Zutaten in Schritt B3 beigefügt werden und nach Schritt b. eine weitere Hitzebehandlung angewandt wird.

15. Verfahren nach Anspruch 12 oder 14, wobei in der weiteren Hitzebehandlung die Zusammensetzung bei einer Temperatur von mindestens 65°C, vorzugsweise 70 bis 90°C, stärker bevorzugt 75 bis 80°C, für eine Zeitdauer gehalten wird, die ausreicht, um das Auftreten einer Steigerung der Konsistenz zu verursachen.

## Revendications

1. Procédé de préparation d'un fromage frais ayant une forme fantaisie dans lequel on extrude par un ajutage dans des conditions telles que la forme du produit tel qu'extrudé ne s'effondre pas, dans lequel on extrude le fromage à une température d'au moins 65°C et dans lequel le fromage, à la température d'extrusion, a une valeur STEVENS d'au moins 20 g.

2. Procédé selon la revendication 1, dans lequel on extrude le fromage à une température d'au moins 70°C, mieux 73-80°C.

3. Procédé selon la revendication 2, dans lequel le fromage, à la température d'extrusion, a une valeur STEVENS de 25-150 g, mieux 30-50 g.

4. Procédé selon les revendications 1 à 3, dans lequel le fromage qui est extrudé a une teneur en matière sèche de 20 à 70%, de préférence 25-55%, mieux 35 à 45%.

5. Procédé selon les revendications 1 à 4, dans lequel le fromage qui est extrudé comprend 0,1 à 5%, de préférence 0,1 à 3%, mieux 0,3 à 1,5% d'agent de liaison et/ou de structuration.

6. Procédé selon la revendication 5, dans lequel l'agent de liaison et/ou de structuration comprend la protéine de petit lait, la gomme de caroube, la gélatine, la carboxyméthylcellulose ou une combinaison de deux ou plusieurs de celles-ci.

7. Procédé selon les revendications 1 à 6, dans lequel le fromage comprend jusqu'à 80%, de préférence 7 à 75%, mieux 20 à 75%, surtout sa à 70% de graisse calculés sur le poids sec du fromage.

8. Procédé selon les revendications 1 à 7, dans lequel
a. on acidifte du lait pour provoquer la coagulation
b. on élimine le petit lait, on applique un traitement thermique et on incorpore facultativement d'autres ingrédients
c. on incorpore facultativement une matière comprenant des particules séparées qui doivent rester discernables telles quelles dans le produit final
d. on extrude le fromage frais.

9. Procédé selon la revendication 8, dans lequel on incorpore au stade b. la crème, le beurre, la graisse, l'agent de liaison et/ou de structuration, le sel, le mascarpone ou deux ou plusieurs de ceux-ci.

10. Procédé selon la revendication 8 ou 9, dans lequel on applique entre les stades b. et c. un traitement d'homogénéisation, de préférence à une température d'au moins 65°C, mieux 70 à 90°C, surtout 75 à 80°C.

11. Procédé selon les revendications a à 10, dans lequel, au stade b.
b.1 on èlimine le petit lait avant
b.2 le traitement thermique et l'incorporation facultative d'autres ingrédients.

12. Procédé selon la revendication 11, dans lequel
* au stade b2, on applique le traitement thermique, on incorpore ensuite d'autres ingrédients, et
* après le stade b, on applique un autre traitement thermique.

13. Procédé selon les revendications 8 à 10, dans lequel, au stade b, on applique les stades suivants
B1 un traitement thermique
B2 l'enlèvement du petit lait
B3 l'incorporation facultative d'autres ingrédients

14. Procédé selon la revendication 13, dans lequel on incorpore d'autres ingrédients au stade B3 et après le stade b, on applique un autre traitement thermique.

15. Procédé selon la revendication 12 ou 14, dans lequel, dans l'autre traitement thermique, on maintient la composition à une température d'au moins 65°C, de préférence 70-90°C, mieux 75-80°C pendant une période de temps suffisante pour provoquer l'augmentation de consistance.
